# EUROPÄISCHE PATENTSCHRIFT

(11) **EP 0 894 650 B1**
(45) Veröffentlichungstag und Bekanntmachung des Hinweises auf die Patenterteilung: **04.12.2002**
(21) Anmeldenummer: 98112924.0
(22) Anmeldetag: 11.07.1998
(51) Int. Cl.: B60D 1/52, B60D 1/06

(54) **Anhängevorrichtung**
Towing device
Dispositif d'attelage

(30) Priorität: 01.08.1997 DE 19733313
(43) Veröffentlichungstag der Anmeldung: 03.02.1999
(73) Patentinhaber: ORIS FAHRZEUGTEILE HANS RIEHLE GmbH, 71696 Möglingen (DE)
(72) Erfinder: Riehle, Hans, 71638 Ludwigsburg (DE); Riehle, Jörg, 70439 Stuttgart (DE)
(74) Vertreter: Hoeger, Stellrecht & Partner

(56) Entgegenhaltungen:
- WO-A-97/04972
- DE-U- 8 423 989
- DE-U- 29 512 453
- DE-U- 29 609 507
- US-A- 2 978 260

## Beschreibung

Die Erfindung betrifft eine Anhängevorrichtung, insbesondere für Personenkraftwagen, umfassend einen Kugelhals, der aus Leichtmetall hergestellt ist, eine an einem ersten anhängerseitigen Ende des Kugelhalses angeordnete Kupplungskugel die ein erstes Formschlußelement trägt, welches durch eine Bewegung in einer Einsetzrichtung in ein zweites, von dem Kugelhals umfaßtes Formschlußelement zur Bildung einer spielfreien Formschlußverbindung eingesetzt ist, welche ihrerseits durch ein Sicherungselement in ihrem spielfreien Zustand fixiert ist, und ein an einem fahrzeugseitigen Ende des Kugelhalses angeordnetes und diesen am Fahrzeug haltendes Befestigungsmittel,

Derartige Anhängevorrichtungen sind aus der DE 296 09 507 U bekannt, wobei die Formschlußelemente aus Materialien unterschiedlicher Festigkeit sind.

Bei diesen Anhängevorrichtungen besteht das Problem, daß die Formschlußelemente eine dauerhafte feste Verbindung ergeben.

Der Erfindung liegt daher die Aufgabe zugrunde, eine Anhängevorrichtung mit geringerem Gewicht zu schaffen, die dauerhaft stabil ist.

Diese Aufgabe wird bei einer Anhängevorrichtung der eingangs beschriebenen Art erfindungsgemäß dadurch gelöst, daß eine der zusammenwirkenden Kraftübertragungsflächen der Formschlußverbindung von einer einen Materialkontakt zwischen den Materialien der Formschlußelemente verhindernden Zwischenschicht gebildet ist.

Mit einer derartigen Zwischenschicht wird durch Verhindern eines Materialkontakts zwischen den Materialien der Formschlußelemente eine dauerhafte Verbindung zwischen diesen geschaffen, wobei insbesondere dann, wenn das mit der Kupplungskugel verbundene Formschlußelement aus einem mit dem Leichtmetall des Kugelhalses korrosiv reagierenden Material hergestellt ist, sichergestellt ist, daß die Formschlußverbindung dauerhaft bestehen bleibt.

Der Vorteil der erfindungsgemäßen Lösung ist außerdem darin zu sehen, daß diese aufgrund der Tatsache, daß der Kugelhals aus Leichtmetall hergestellt ist, ein wesentlich geringeres Gewicht aufweist, daß die getrennte Herstellbarkeit von Kugelhals und Kupplungskugel kostengünstige Herstellverfahren für diese beiden Teile zuläßt, und daß die erfindungsgemäß vorgesehene Formschlußverbindung mit zwei durch Bewegen in Einsetzrfchtung in Eingriff bringbaren Formschlußelemente sowie die Sicherung der Formschlußverbindung durch ein Sicherungselement ebenfalls einfach herstellbar sind und dabei eine hohe Stabilität der Verbindung zwischen Kupplungskugel und Kugelhals gewährleisten.

Diese Zwischenschicht hat den Vorteil, daß damit eine korrosive Reaktion zwischen den beiden Formschlußelementen vermieden werden kann und somit die Formschlußverbindung dauerhaft spielfrei bleibt.

Eine besonders vorteilhafte Lösung sieht vor, daß die Zwischenschicht eine gegenüber Stahl und Leichtmetall inerte Schicht, insbesondere eine korrosionsinerte Schicht, ist und somit diese Zwischenschicht die Möglichkeit zuläßt, die Kupplungskugel und das mit dieser verbundene Formschlußelement aus Stahl auszubilden.

Die Zwischenschicht kann dabei in unterschiedlichster Art und Weise ausgebildet sein. Ein vorteilhaftes Ausführungsbeispiel einer Zwischenschicht sieht vor, daß diese durch ein anorganisches oder organisches Micro-Schicht-System gebildet ist, welches beispielsweise Zink umfaßt, und insbesondere auf mindestens einer Grundfläche der Kraftübertragungsfläche angeordnet ist.

Im einfachsten Fall ist dabei die Zwischenschicht auf eines der Formschlußelemente aufgetragen, bevor dieses mit dem anderen Formschlußelement in Eingriff gebracht ist.

Um ferner jede Art von Spaltkorrosion aufgrund eindringenden Wassers zu unterbinden ist vorzugsweise vorgesehen, daß ein endseitig der Kraftübertragungsflächen der Formschlußverbindung gebildeter Spalt wasserfest abgedichtet ist.

Diese wasserfeste Abdichtung des Spalts kann in unterschiedlichster Art und Weise erfolgen.

Eine besonders vorteilhafte Lösung sieht vor, daß der jeweilige Spalt durch einen diesen übergreifenden Dichtkörper abgedichtet ist.

Vorzugsweise liegt dabei der Dichtkörper an beiden Formschlußelementen den Spalt übergreifend an.

Ein anderes vorteilhaftes Ausführungsbeispiel sieht vor, daß das Dichtelement an dem äußeren Formschlußelement anliegt und außerdem an einem das innere Formschlußelement überdeckenden Abdeckelement.

Eine weitere vorteilhafte Lösung sieht vor, daß der Spalt durch ein elastisches Dichtelement abgedichtet ist. Ein derartiges elastisches Dichtelement könnte beispielsweise eine den Spalt verschließende elastische Masse sein.

Hinsichtlich der Ausbildung des Kugelhalses selbst wurden im Zusammenhang mit der bisherigen Erläuterung der einzelnen Ausführungsbeispiele keine näheren Angaben gemacht. So sieht ein vorteilhaftes Ausführungsbeispiel vor, daß der Kugelhals an seinem anhängerseitigen Ende einen Ringkörper zur Bildung des Formschlußelements aufweist. Ein derartiger Ringkörper ist insbesondere angesichts der Verwendung von Leichtmetall besonders vorteilhaft und garantiert die erforderliche Stabilität und Langzeitspietfreiheit der Formschlußverbindung zwischen Kugelhals und Kupplungskugel.

Besonders stabil ist dieser Ringkörper dann, wenn dieser sich radial zu einer Mittelachse der Kupplungskugel mindestens bis zu dem Radius der Kupplungskugel selbst erstreckt.

Ein besonders bevorzugtes Ausführungsbeispiel sieht vor, daß der Ringkörper seitlich über einen sich zwischen dem anhängerseitigen und dem fahrzeugseitigen Ende erstreckenden Mittelabschnitt des Kugelhalses hinaus erstreckt.

Dieser Mittelabschnitt hat dann insbesondere eine große Stabilität, wenn dieser ein im Querschnitt doppel-T-förmiges Profil aufweist, wobei sich dieses Profil besonders vorteilhaft mit dem Ringkörper verbinden läßt.

Eine besonders vorteilhafte Lösung, insbesondere hinsichtlich der Belastbarkeit durch die Zugkraft sieht vor, daß die Einsetzrichtung quer zu einer Richtung der Zugkraft verläuft, so daß die Zugkraft stets quer zur Einsetzrichtung auf die Formschlußverbindung wirkt.

Die Formschlußelemente könnten prinzipiell in unterschiedlichster Art und Weise ausgebildet sein. Eine besonders vorteilhafte Lösung sieht vor, daß das erste Formschlußelement und das zweite Formschlußelement eine einen Einsteckkörper und eine Einsteckaufnahme für diesen Einsteckkörper umfassende Steckverbindung bilden.

Ein derartiger Einsteckkörper könnte beispielsweise zylindrisch ausgebildet sein und eine Einsteckaufnahme eine entsprechende zylindrische Aufnahme sein.

Es ist aber auch denkbar, den Einsteckkörper in Form einer nichtzylindrischen Außenkontur, beispielsweise einer vieleckigen oder gezahnten Außenkontur auszubilden und die Einsteckaufnahme mit einer entsprechenden Form zu gestalten.

Beispielsweise wäre es auch denkbar, insbesondere angesichts der Tatsache, daß zumindest der Kugelhals aus Leichtmetall hergestellt ist, daß entweder der Einsteckkörper oder die Einsteckaufnahme aus Leichtmetall sind und das jeweils andere Formschlußelement beim Einstecken in Einsteckrichtung noch eine Deformation des aus Leichtmetall hergestellten Formschlußelements bewirkt, um somit eine besonders dauerhafte spielfreie Steckverbindung zu ermöglichen.

Um ferner auch sicherzustellen, daß auf die Kupplungskugel aufgrund des Einsatzes von Anhängerstabilisatoren wirkende Drehmomente auf den Kugelhals übertragen werden können, ist vorzugsweise vorgesehen, daß die Formschlußverbindung um die Einsetzrichtung als Drehachse drehfest ausgebildet ist. Eine derartige drehfeste Ausbildung kann in unterschiedlichster Art und Weise erfolgen. Sie kann durch jede Art von Fügen, wie beispielsweise Kleben oder auch ausreichenden Reibschluß sichergestellt sein. Es ist aber auch beispielsweise denkbar, die Formschlußverbindung bezüglich einer Drehung um die Drehachse formschlüssig zu gestalten.

Ein besonders bevorzugtes Ausführungsbeispiel der erfindungsgemäßen Steckverbindung, welches sich insbesondere aufgrund der einfachen Herstellbarkeit auszeichnet, sieht vor, daß die Steckverbindung eine Konusverbindung ist. Eine derartige Verbindung hat den großen Vorteil, daß sie sich einfach herstellen läßt und daß sich außerdem die Formschlußelemente in einfacher Art und Weise, nämlich durch ausreichend tiefes Einsetzen in Einsetzrichtung, dauerhaft spielfrei miteinander verbinden lassen.

Eine besonders bevorzugte Lösung sieht vor, daß die Konusverbindung selbsthemmend ausgebildet ist. In diesem Fall ist bei der Konusverbindung durch die Selbsthemmung ein Lösen in Richtung der Einsteckrichtung verhindert.

Außerdem ist- ohne daß zusätzliche Formschlußelemente notwendig sind - ebenfalls aufgrund der Selbsthemmung eine bis zu einem durch die maximal auftretenden Momente festgelegten Losbrechmoment drehfeste Verbindung zwischen den Formschlußelementen dann erreichbar, wenn die Konusverbindung in Einsteckrichtung noch zusätzlich mit Kraft vorgespannt ist. Vorzugsweise ist hierzu vorgesehen, die Konusverbindung durch ein Spannelement, beispielsweise eine Spannschraube, in Einsteckrichtung mit der Kraft vorgespannt zu halten.

Hinsichtlich der Ausbildung der Kupplungskugel wurden im Zusammenhang mit den bislang beschriebenen Ausführungsbeispielen keine näheren Angaben gemacht. So wäre es beispielsweise möglich, die Kupplungskugel ebenfalls aus Leichtmetall auszubilden, jedoch gegebenenfalls mit einer Oberflächenbehandlung zu versehen.

Eine andere vorteilhafte Lösung sieht jedoch vor, die Kupplungskugel aus einem sich vom Leichtmetall des Kugelhalses zu unterscheidenden Material herzustellen, um den durch die getrennte Fertigung von Kugelhals und Kupplungskugel gegebenen Vorteil auszunützen und die Kupplungskugel hinsichtlich der Materialauswahl an die auf diese wirkenden Belastungen anzupassen.

Eine insbesondere aus Gründen der Herstellkosten besonders vorteilhafte Lösung sieht dabei vor, daß die Kupplungskugel aus Stahl hergestellt ist, da bereits eine Vielzahl von Herstellverfahren für die Kupplungskugel aus Stahl bekannt und erprobt sind.

Dabei wäre es denkbar, die Kupplungskugel aus einem korrosionsbeständigen Stahl, wie beispielsweise Edelstahl herzustellen. Weit kostengünstiger ist es jedoch, die Kupplungskugel aus herkömmlichen Stahl herzustellen.

Ferner wäre es grundsätzlich denkbar, daß an der Kupplungskugel vorzusehende Formschlußelement ebenfalls wiederum aus einem anderen Material als die Kupplungskugel herzustellen. Aus Gründen der Einfachheit der Herstellung ist es jedoch besonders günstig, wenn das Formschlußelement der Kupplungskugel aus demselben Material hergestellt ist, wie die Kupplungskugel selbst.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: einen partiellen Längsschnitt durch eine erfindungsgemäße Anhängevorrichtung und
- Fig. 2: eine perspektivische Seitenansicht einer erfindungsgemäßen Anhängevorrichtung.

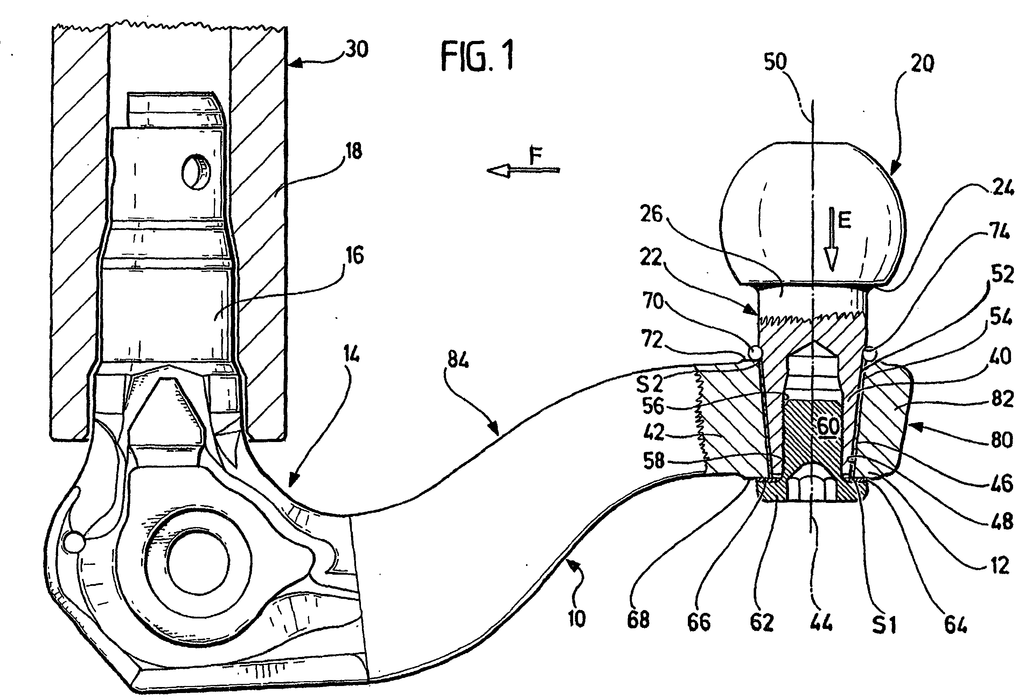

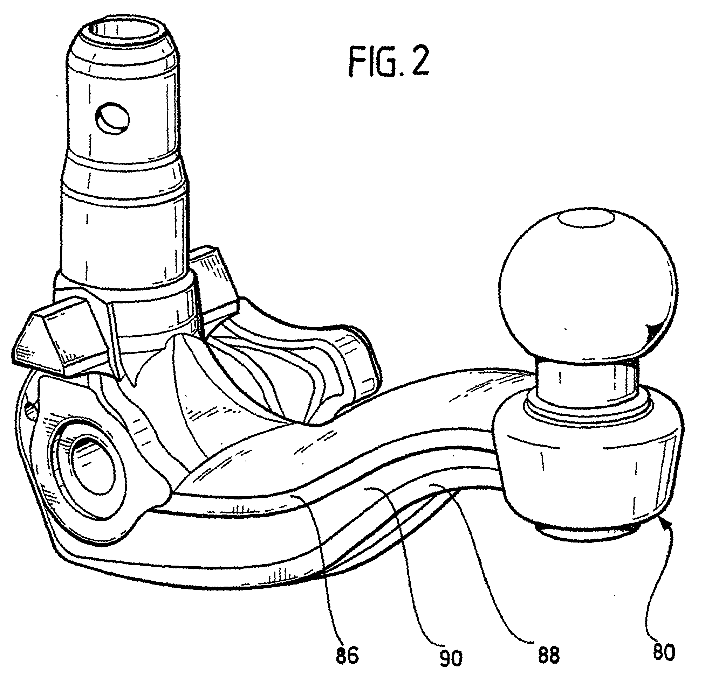

Ein Ausführungsbeispiel einer erfindungsgemäßen Anhängevorrichtung, dargestellt in Fig. 1 und 2, umfaßt einen Kugelhals 10, welcher an einem anhängerseitigen Ende 12 eine Kupplungskugel 20 trägt und an einem fahrzeugseitigen Ende 14 mit einem Schaft 16 versehen ist, welcher vorzugsweise lösbar in eine fahrzeugfeste Aufnahmehülse 18 einsteckbar ist.

Die Aufnahmehülse 18 und der Schaft 16 bilden dabei ein als Ganzes mit 30 bezeichnetes Befestigungsmittel, mit welchem der Kugelhals 10 am Fahrzeug fixierbar ist. Zur Fixierung an dem Ende 12 des Kugelhalses 10 ist die Kupplungskugel 20 mit einem als Ganzes mit 22 bezeichneten Ansatz versehen, welcher sich ausgehend von einer dem Ende 12 des Kugelhalses 10 zugewandten Unterseite 24 der Kupplungskugel 20 erstreckt und im Anschluß an die Unterseite 24 ein Zwischenstück 26 aufweist, an welches sich dann ein Einsteckkörper 40 anschließt, welcher in einer Einsteckrichtung E in eine Einsteckaufnahme 42 zur Bildung einer formschlüssigen spielfreien Steckverbindung einsteckbar ist.

Zweckmäßigerweise weist der Einsteckkörper 40 eine zu einer zur Einsteckrichtung E parallelen Konusachse 44 konische Außenkonusfläche 46 auf, welche mit einer konischen Innenfläche 48 der Einsteckaufnahme 42 zusammenwirkt, um die spielfreie Formschlußverbindung zwischen dem Einsteckkörper 40 und der Einsteckaufnahme 42 zu erhalten.

Vorzugsweise sind die Außenkonusfläche 46 und die Innenkonusflache 48 bezüglich der Achse 44 so ausgebildet, daß sie eine selbsthemmende Konusverbindung miteinander bilden, die nicht nur in der Lage ist, in Fahrtrichtung F und quer zu dieser wirkende Zugkräfte aufzunehmen, sondern auch hohe auf die Kupplungskugel 20 wirkende Drehmomente, die durch Stabilisiervorrichtungen für Anhänger entstehen.

Die Achse 44 ist ferner vorzugsweise so gelegt, daß sie quer zur Fahrtrichtung F verläuft und mit einer Mittelachse 50 der Kupplungskugel 20 zusammenfällt.

Bei einer bevorzugten Version ist die Kupplungskugel 20 aus Stahl hergestellt und sowohl das Zwischenstück 26 als auch der Einsteckkörper 20 sind einstückig an die Kupplungskugel 20 angeformt und ebenfalls aus Stahl ausgebildet.

Der Einsteckkörper 40 ist ferner noch seinerseits mit einer parallel zur Außenkonusfläche 46 verlaufenden konischen Mantelfläche 52 versehen, auf welcher eine Zwischenschicht 54 aufgetragen ist, die ihrerseits dann die Außenkonusfläche 46 bildet.

Die Zwischenschicht 54 ist vorzugsweise durch ein anorganisches oder organisches Micro-Schicht-System gebildet mit einer Dicke im Bereich zwischen ungefähr 8 und ungefähr 15 µm. Derartige Micro-Schicht-Systeme werden beispielsweise unter dem Markennamen DELTA-MAGNI, insbesondere als DELTA-Tone oder DELTA-Seal, von der Magni-Industries Inc. in Troy (USA) angeboten oder unter dem Markennamen DACROMET von der Diamond Shamrock Corporation, Metal Coatings Division (USA). Diese vorzugsweise Zink umfassende Micro-Schicht-Systeme dienen dazu, eine Oberflächenschutzschicht für den Einsteckkörper 40 in all den Bereichen zu bilden, in denen dieser mit der Einsteckaufnahme 42 zusammenwirkt.

Dies ist insbesondere dann erforderlich, wenn der Einsteckkörper 40 aus üblichem Stahl, jedoch nicht aus Edelstahl ausgebildet ist, und die Einsteckaufnahme 42 aus Leichtmetall, vorzugsweise Aluminium und dessen Legierungen. In diesem Fall dient die Zwischenschicht 54 dazu, eine Korrosion zwischen Stahl und Aluminium zu verhindern.

Obwohl die Außenkonusfläche 46 und die Innenkonusfläche 48 vorzugsweise in einem Konuswinkel zur Achse 44 laufen, der so ist, daß sich eine selbsthemmende Konus-Steckverbindung bildet, ist vorzugsweise der Einsteckkörper 40 noch relativ zu Einsteckaufnahme 42 gesichert.

Hierzu ist der Einsteckkörper 40 noch mit einer inneren Gewindebohrung 56 versehen, in welcher ein mit einem Außengewinde 58 versehener Haltezapfen 60 einschraubbar ist.

Der Haltezapfen 60 weist seinerseits einen Kopf 62 mit einem radial nach außen überstehenden Ringflansch 64 auf, welcher über eine Dichtscheibe 66 auf eine Anlagefläche 68 der Einsteckaufnahme 42 wirkt, welche auf einer der Kupplungskugel 20 gegenüberliegenden Seite der Einsteckaufnahme 42 liegt.

Der Haltezapfen 60 dient nicht nur der Fixierung des Einsteckkörpers 40 in der Einsteckaufnahme 42, sondern auch als Spannschraube, um die selbsthemmende Konusverbindung in der Einsteckrichtung stets mit einer Kraft zu beaufschlagen und somit durch die Konusverbindung auch eine bis zu den zugelassenen Drehmomenten drehfeste Verbindung zu erhalten.

Die Anlagefläche 68 verläuft dabei vorzugsweise senkrecht zur Achse 44.

Die Dichtscheibe 66 zwischen dem Flansch 64 und der Anlagefläche 68 ist vorzugsweise aus nichtrostendem Stahl ausgebildet und dient somit einerseits als Gleitzwischenlage beim Einschrauben der Halteschraube 60 zwischen dem Flansch 64 und der Anlagefläche 68 und außerdem als Abdichtung eines sich zwischen der Außenkonusfläche 46 und der Innenkonusfläche 48 bildenden Spalts S1 auf einer der Kupplungskugel 20 abgewandten Seite, so daß aufgrund der Dichtscheibe 66 kein Wasser von dieser Seite her in den Spalt S1 eindringen kann.

Die Halteschraube 66 wird dabei so weit in das Innengewinde 56 eingeschraubt, daß sie den Einsteckkörper 40 in seiner spielfrei in der Einsteckaufnahme 42 sitzenden Stellung hält.

Um außerdem auf einer der Kupplungskugel 20 zugewandten Seite der Einsteckaufnahme 42 ebenfalls einen sich bildenden Spalt S2 zwischen der Außenkonusfläche 46 und der Innenkonusfläche 48 gegen ein Eindringen von Feuchtigkeit oder sonstigen korrosiven Medien zu schützen, ist der Spalt S2 durch beispielsweise einen O-Ring 70 abgedeckt, welcher einerseits auf einer der Kupplungskugel 20 zugewandten Anlagefläche 72 der Einsteckaufnahme 42 anliegt und andererseits radial an einer Außenumfangsfläche des Ansatzes 22. Vorzugsweise ist zur Aufnahme des O-Rings 70 zwischen dem Einsteckkörper 40 und dem Zwischenstück 26 eine umlaufende, zumindest stufenförmig ausgebildete Aufnahme 74 vorgesehen, welche den O-Ring 70 in seiner den Spalt S2 zwischen der Außenkonusfläche 46 und der Innenkonusfläche 48 verschließenden Stellung hält.

Um der Einsteckaufnahme 42 die notwendige Stabilität zu verleihen, wird die Innenkonusfläche 48 von einem Ringkörper 80 umgeben, welcher sich radial zur Achse 44 bis ungefähr in eine Dimension der Kupplungskugel 20 erstreckt und somit aufgrund einer Dicke einer Ringwand 82 desselben die erforderliche Stabilität aufweist, so daß dieser Ringkörper 80 einerseits aus Leichtmetall, vorzugsweise Aluminium oder dessen Legierungen, hergestellt sein kann, und so formstabil ist, daß sich die Innenkonusfläche 48 bei den auftretenden Belastungen nicht weitet und somit die selbsthemmende Konussteckverbindung zwischen der Innenkonusfläche 48 und der Außenkonusfläche 46 des Einsteckkörpers 40 dauerhaft erhalten bleibt.

An den Ringkörper 80, welcher ungefähr das Ende 12 des Kugelhalses 10 bildet, schließt sich dann der sich zwischen dem Ende 12 und dem Ende 14 erstreckende Mittelabschnitt 84 des Kugelhalses 10 an, welcher, wie in Fig. 2 verdeutlicht dargestellt, im Querschnitt doppel T-förmig ausgebildet ist und einen oberen Steg 86 und einen unteren Steg 88 aufweist, welche sich quer zu einem Mittelsteg 90 erstrecken und seitlich jeweils beiderseits über diesen überstehen.

Diese doppel T-förmige Ausbildung des Mittelabschnitts 84 läßt einerseits diesen sehr stabil werden und dient andererseits dazu, auch eine stabile Verbindung zwischen diesem und dem Ringkörper 80 herzustellen.

Vorzugsweise sind bei den dargestellten Ausführungsbeispielen sämtliche Elemente des Kugelhalses 10, also auch das Ende 14 und der Schaft 16 aus Leichtmetall, insbesondere Aluminium oder dessen Legierungen, ausgebildet, um die Einheit aus Kugelhals 10 und Kupplungskugel 20 möglichst leicht auszuführen.

## Patentansprüche

1. Anhängevorrichtung, insbesondere für Personenkraftwagen, umfassend einen Kugelhals (10), der aus Leichtmetall hergestellt ist, eine an einem ersten anhängerseitigen Ende des Kugelhalses (10) angeordnete Kupplungskugel (20) die ein erstes Formschlußelement (40) trägt, welches durch eine Bewegung in einer Einsetzrichtung (E) in ein zweites, von dem Kugelhals (10) umfaßtes Formschlußelement (42) zur Bildung einer spielfreien Formschlußverbindung eingesetzt ist, welche ihrerseits durch ein Sicherungselement (60) in ihrem spielfreien Zustand fixiert ist und ein an einem fahrzeugseitigen Ende des Kugelhalses angeordnetes und diesen am Fahrzeug haltendes Befestigungsmittel,
**dadurch gekennzeichnet, daß** eine der zusammenwirkenden Kraftübertragungsflächen (46) der Formschlußverbindung von einer einen Materialkontakt zwischen den Materialien der Formschlußelemente (40, 42) verhindernden Zwischenschicht (54) gebildet ist.

2. Anhängevorrichtung nach Anspruch 1, **dadurch gekennzeichnet, daß** die Zwischenschicht (54) eine gegenüber Stahl und Leichtmetall inerte Schicht ist.

3. Anhängevorrichtung nach Anspruch 2, **dadurch gekennzeichnet, daß** die Zwischenschicht (54) eine korrosionsinerte Schicht ist.

4. Anhängevorrichtung nach Anspruch 2 oder 3, **dadurch gekennzeichnet, daß** die Zwischenschicht (54) als anorganisches oder organisches Micro-Schlchtsystem ausgebildet ist.

5. Anhängevorrichtung nach einem der voranstehenden Ansprüche, **dadurch gekennzeichnet, daß** die Zwischenschicht (54) durch eine Kunststoffbeschichtung gebildet ist.

6. Anhängevorrichtung nach einem der voranstehenden Ansprüche, **dadurch gekennzeichnet, daß** die Zwischenschicht (54) durch eine Kunststoffbeschichtung auf mindestens einer Grundfläche (52) der Kraftübertragungsfläche (46) gebildet ist.

7. Anhängevorrichtung nach einem der voranstehenden Ansprüche, **dadurch gekennzeichnet, daß** ein endseitig der Kraftübertragungsflächen (46, 48) der Formschlußverbindung und zwischen diesen auf einer der Kupplungskugel (20) abgewandten Seite gebildeter Spalt (S1) wasserrest abgedichtet ist.

8. Anhängevorrichtung nach einem der voranstehenden Ansprüche, **dadurch gekennzeichnet, daß** ein endseitig der Kraftübertragungsflächen (46, 48) der Formschlußverbindung und zwischen diesen auf einer der Kupplungskugel (20) zugewandten Seite gebildeter Spalt (S2) wasserfest abgedichtet ist.

9. Anhängevorrichtung nach Anspruch 7 oder 8, **dadurch gekennzeichnet, daß** der jeweilige Spalt (S1, S2) durch einen diesen übergreifenden Dichtkörper (64, 70). abgedichtet ist.

10. Anhängevorrichtung nach Anspruch 8, **dadurch gekennzeichnet, daß** der endseitig der Kraftübertragungsflächen (46, 48) der Formschlußverbindung und zwischen diesen auf einer der Kupplungskugel (20) zugewandten Seite gebildete Spalt (52) durch ein elastisches Dichtelement (70) abgedichtet ist.

11. Anhängevorrichtung nach einem der voranstehenden Ansprüche, **dadurch gekennzeichnet, daß** der Kugelhals (10) an seinem anhängerseitigen Ende (12) einen Ringkörper (80) zur Bildung des Formschlußelements (42) aufweist.

12. Anhängevorrichtung nach Anspruch 11, **dadurch gekennzeichnet, daß** sich der Ringkörper (80) radial zu einer Mittelachse (50) von Kupplungskugel (20) und Ansatz (22) mindestens bis zu dem Radius der Kupplungskugel (20) erstreckt.

13. Anhängevorrichtung nach Anspruch 11 oder 12, **dadurch gekennzeichnet, daß** der Ringkörper (80) sich über einander gegenüberliegende Seiten eines sich zwischen dem anhängerseitigen (12) und dem fahrzeugseitigen Ende (14) erstreckenden Mittelabschnitts (84) des Kugelhalses (10) hinauserstreckt.

14. Anhängevorrichtung nach einem der voranstehenden Ansprüche, **dadurch gekennzeichnet, daß** die Einsetzrichtung (E) quer zu einer Richtung (F) der Zugkraft verläuft.

15. Anhängevorrichtung nach einem der voranstehenden Ansprüche, **dadurch gekennzeichnet, daß** das erste Formschlußelement (40) und das zweite Formschlußelement (42) eine einen Einsteckkörper und eine Einsteckaufnahme für diesen umfassende Steckverbindung bilden.

16. Anhängevorrichtung nach Anspruch 15, **dadurch gekennzeichnet, daß** die Formschlußverbindung um die Einsetzrichtung (E) als Drehachse drehfest ausgebildet ist.

17. Anhängevorrichtung nach Anspruch 15 oder 16, **dadurch gekennzeichnet, daß** die Steckverbindung eine Konusverbindung ist.

18. Anhängevorrichtung nach Anspruch 17, **dadurch gekennzeichnet, daß** die Konusverbindung selbsthemmend ausgebildet ist.

19. Anhängevorrichtung nach einem der voranstehenden Ansprüche, **dadurch gekennzeichnet, daß** die Kupplungskugel (20) aus einem sich vom Leichtmetall des Kugelhalses (10) unterscheidenden Material hergestellt ist.

20. Anhängevorrichtung nach Anspruch 19, **dadurch gekennzeichnet, daß** die Kupplungskugel (20) aus Stahl hergestellt ist.

21. Anhängevorrichtung nach einem der voranstehenden Ansprüche, **dadurch gekennzeichnet, daß** die Kupplungskugel (20) und das von dieser getragene Formschlußelement (40) aus demselben Material hergestellt sind.

## Claims

1. A towing device, especially one for motor cars, comprising a ball neck (10) which is made of a light metal, a coupling-ball (20) which is arranged at a first, trailer end of the ball neck (10) and which supports a first snug-fitting element (40) that is inserted by virtue of a movement in a direction of insertion (E) into a second snug-fitting element (42) comprised by the ball neck (10) for forming a play-free snug-fitting connection, which, for its part, is fixed by a securing element (60) in its play-free state, and a mounting means which is arranged at the vehicle end of the ball neck and serves for holding the ball neck on the vehicle,
**characterised in that** one of the co-operating power transmission surfaces (46) of the snug-fitting connection is formed by an intermediate layer (54) which prevents material contact between the materials of the snug-fitting elements (40, 42).

2. A towing device in accordance with Claim 1, **characterised in that** the intermediate layer (54) is an inert layer with respect to steel and light metals.

3. A towing device in accordance with Claim 2, **characterised in that** the intermediate layer (54) is a corrosion-inert layer.

4. A towing device in accordance with Claim 2 or 3,
**characterised in that** the intermediate layer (54) is an inorganic or organic micro-layer-system.

5. A towing device in accordance with any of the preceding claims, **characterised in that** the intermediate layer (54) is formed by a coating of synthetic material.

6. A towing device in accordance with any of the preceding Claims, **characterised in that** the intermediate layer (54) is formed by a coating of synthetic material on at least a base surface (52) of the power transmission surface (46).

7. A towing device in accordance with any of the preceding Claims, **characterised in that** a gap (S1), which is formed at an end of and between the power transmission surfaces (46, 48) of the snug-fitting connection and remote from the coupling-ball (20), is sealed in watertight manner.

8. A towing device in accordance with any of the preceding Claims, **characterised in that** a gap (S2), which is formed at an end of and between the power transmission surfaces (46, 48) of the snug-fitting connection and facing the coupling-ball (20), is sealed in watertight manner.

9. A towing device in accordance with Claim 7 or 8,
**characterised in that** the respective gap (S1, S2) is sealed by a sealing body (64, 70) extending thereover.

10. A towing device in accordance with Claim 8, **characterised in that** the gap (S2), which is formed at an end of and between the power transmission surfaces (46, 48) of the snug-fitting connection and facing the ball coupling (20), is sealed by a resilient sealing element (70).

11. A towing device in accordance with any of the preceding Claims, **characterised in that** the trailer end (12) of the ball neck (10) comprises an annular body (80) for forming the snug-fitting element (42).

12. A towing device in accordance with Claim 11, **characterised in that** the annular body (80) extends radially relative to a central axis (50) of the coupling-ball (20) and an extension (22) up to at least the radius of the coupling-ball (20).

13. A towing device in accordance with Claim 11 or 12,
**characterised in that** the annular body (80) extends beyond mutually opposite sides of a central section (84) of the ball neck (10) extending between the trailer end (12) and the vehicle end (14).

14. A towing device in accordance with any of the preceding Claim, **characterised in that** the direction of insertion (E) extends transversely relative to the direction (F) of the tractional force.

15. A towing device in accordance with any of the preceding Claims, **characterised in that** the first snug-fitting element (40) and the second snug-fitting element (42) form a plug-in connection comprising a plug-in member and a plug socket therefor.

16. A towing device in accordance with Claim 15, **characterised in that** the snug-fitting connection is non-rotatable about a rotational axis formed in the direction of insertion (E).

17. A towing device in accordance with Claim 15 or 16,
**characterised in that** the plug-in connection is a cone-type connection.

18. A towing device in accordance with Claim 17, **characterised in that** the cone-type connection is self-locking.

19. A towing device in accordance with any of the preceding Claims, **characterised in that** the coupling-ball (20) is made from a material differing from the light metal of the ball neck (10).

20. A towing device in accordance with Claim 19, **characterised in that** the coupling-ball (20) is made of steel.

21. A towing device in accordance with any of the preceding Claims, **characterised in that** the coupling-ball (20) and the snug-fitting element (40) supported thereby are made of the same material.

## Revendications

1. Dispositif d'attelage, en particulier pour des véhicules de tourisme, comprenant un col de cygne (10), réalisé en métal léger, une boule d'attelage (20) disposée sur une première extrémité du côté remorque du col de cygne (10), laquelle boule d'attelage porte un premier élément d'accouplement par formes complémentaires (40) qui, par un mouvement dans un sens d'introduction (E), est inséré dans un deuxième élément d'accouplement par formes complémentaires (42), englobé dans le col de cygne (10), afin de former un assemblage par formes complémentaires sans jeu, qui, pour sa part, est fixé par un élément de blocage (60) dans son état sans jeu, et un moyen de fixation, qui est disposé sur l'extrémité du côté véhicule du col de cygne et qui tient celui-ci au véhicule, **caractérisé en ce que** l'une des surfaces de transmission de forces (46), coopérantes, de l'assemblage par formes complémentaires, est formée par une couche intermédiaire (54) empêchant un contact de matière entre les matériaux des éléments d'accouplement par formes complémentaires (40, 42).

2. Dispositif d'attelage selon la revendication 1, **caractérisé en ce que** la couche intermédiaire (54) est une couche inerte par rapport à l'acier et à un métal léger.

3. Dispositif d'attelage selon la revendication 2, **caractérisé en ce que** la couche intermédiaire (54) est une couche inerte à la corrosion.

4. Dispositif d'attelage selon la revendication 2 ou 3, **caractérisé en ce que** la couche intermédiaire (54) est conçue sous forme de système de micro-couche inorganique ou organique.

5. Dispositif d'attelage selon une des revendications précédentes, **caractérisé en ce que** la couche intermédiaire (54) est formée par un revêtement en matière synthétique.

6. Dispositif d'attelage selon une des revendications précédentes, **caractérisé en ce que** la couche intermédiaire (54) est formée par un revêtement en matière synthétique déposé sur au moins une surface de base (52) de la surface de transmission de forces (46).

7. Dispositif d'attelage selon une des revendications précédentes, **caractérisé en ce qu'**une fente (S1), formée sur une extrémité des surfaces de transmission de forces (46, 48) de l'assemblage par formes complémentaires et entre ces surfaces, sur un côté opposé à la boule d'attelage (20), est rendue étanche à l'eau.

8. Dispositif d'attelage selon une des revendications précédentes, **caractérisé en ce qu'**une fente (S2), formée sur une extrémité des surfaces de transmission de forces (46, 48) de l'assemblage par formes complémentaires et entre ces surfaces, sur un côté orienté vers la boule d'attelage (20), est rendue étanche à l'eau.

9. Dispositif d'attelage selon la revendication 7 ou 8, **caractérisé en ce que** chaque fente (S1, S2) est étanchéifiée par un corps d'étanchéité (64, 70) recouvrant ladite fente.

10. Dispositif d'attelage selon la revendication 8, **caractérisé en ce que** la fente (S2), formée sur une extrémité des surfaces de transmission de forces (46, 48) de l'assemblage par formes complémentaires et entre ces surfaces sur un côté orienté vers la boule d'attelage (20), est étanchéifiée par un élément élastique d'étanchéité.

11. Dispositif d'attelage selon une des revendications précédentes, **caractérisé en ce que** le col de cygne (10) comporte sur son extrémité (12) du côté remorque un corps annulaire (80) destiné à former l'élément d'accouplement par formes complémentaires (42).

12. Dispositif d'attelage selon la revendication 11, **caractérisé en ce que** le corps annulaire (80) s'étend radialement par rapport à un axe médian (50) de la boule d'attelage (20) et de la saillie (22) au moins jusqu'au rayon de la boule d'attelage (20).

13. Dispositif d'attelage selon la revendication 11 ou 12, **caractérisé en ce que** le corps annulaire (80) s'avance au-delà de côtés mutuellement opposés d'une partie centrale (84) du col de cygne (10), laquelle s'étend entre l'extrémité (12) du côté remorque et l'extrémité (14) du côté véhicule.

14. Dispositif d'attelage selon une des revendications précédentes, **caractérisé en ce que** le sens d'introduction (E) est transversal à un sens (F) de la force de traction.

15. Dispositif d'attelage selon une des revendications précédentes, **caractérisé en ce que** le premier élément d'accouplement par formes complémentaires (40) et le deuxième élément d'accouplement par formes complémentaires (42) forment un assemblage par enfichage comprenant un corps à enficher et un logement d'enfichage pour ledit corps à enficher.

16. Dispositif d'attelage selon la revendication 15, **caractérisé en ce que** l'assemblage par formes complémentaires est conçu non rotatif autour du sens d'introduction (E) considéré comme axe de rotation.

17. Dispositif d'attelage selon la revendication 15 ou 16, **caractérisé en ce que** l'assemblage par enfichage est un assemblage conique.

18. Dispositif d'attelage selon la revendication 17, **caractérisé en ce que** l'assemblage conique est conçu sous forme d'assemblage autobloquant.

19. Dispositif d'attelage selon une des revendications précédentes, **caractérisé en ce que** la boule d'attelage (20) est réalisée dans un matériau différent du métal léger du col de cygne (10).

20. Dispositif d'attelage selon la revendication 19, **caractérisé en ce que** la boule d'attelage (20) est réalisée en acier.

21. Dispositif d'attelage selon une des revendications précédentes, **caractérisé en ce que** la boule d'attelage (20) et l'élément d'accouplement par formes complémentaires (40), supporté par celle-ci, sont réalisés dans le même matériau.
